# EUROPEAN PATENT SPECIFICATION

(11) **EP 4 383 431 B1**
(45) Date of publication and mention of the grant of the patent: **04.03.2026**
(21) Application number: 22922692.3
(22) Date of filing: 26.01.2022
(51) Int. Cl.: H01M 50/30, H01M 50/152, H01M 50/342, H01M 50/103, H01M 50/145

(54) **PRESSURE RELIEF APPARATUS, CELL, BATTERY AND ELECTRICAL DEVICE**
DRUCKENTLASTUNGSVORRICHTUNG, ZELLE, BATTERIE UND ELEKTRISCHE VORRICHTUNG
APPAREIL DE RELÂCHEMENT DE PRESSION, CELLULE, BATTERIE ET DISPOSITIF ÉLECTRIQUE

(43) Date of publication of application: 12.06.2024
(73) Proprietor: Contemporary Amperex Technology (Hong Kong) Limited, Central, Central And Western District (HK)
(72) Inventor: FANG, Kun, Ningde, Fujian 352100 (CN); GUO, Zhijun, Ningde, Fujian 352100 (CN); JIN, Haizu, Ningde, Fujian 352100 (CN)
(74) Representative: Rowlands, Stuart Michael
(86) International application number: PCT/CN2022/074122
(87) International publication number: WO 2023/141842

(56) References cited:
- WO-A1-2014/069575
- WO-A1-2021/117426
- WO-A1-2021/200440
- WO-A1-2022/006894
- WO-A1-2022/006894
- CN-A- 112 713 345
- CN-U- 201 562 718
- CN-U- 214 254 572
- CN-U- 214 254 572
- CN-U- 215 578 755
- JP-A- 2000 233 247
- JP-A- 2018 166 023
- JP-A- H04 349 342
- JP-A- H08 115 714
- KR-A- 20000 066 690
- US-A1- 2014 072 841
- US-A1- 2020 161 713
- US-A1- 2023 027 470
- US-B1- 6 632 558
- US-B2- 7 771 863

## Description

### Technical Field

The present application relates to the field of battery technology, and particularly to a pressure relief apparatus, a battery cell, a battery, and a power consumption device.

### Background Art

With the development of new energy technologies, batteries are increasingly widely used, for example, in mobile phones, notebook computers, scooters, electric vehicles, electric airplanes, electric ships, electric toy cars, electric toy boats, electric toy planes, and electric tools.

In the development of battery technology, in addition to improving the performance of battery cells, safety is also an issue that needs to be considered. Therefore, how to improve the safety of battery cells is an urgent problem to be solved in the battery technology.

WO2021/117426A1 relates to a sealed battery provided with a bottomed cylindrical battery can having an opening, an electrode assembly accommodated inside the battery can, and a sealing plate for sealing the opening of the battery can, wherein the sealing plate has a first main surface facing the outside of the battery can and a second main surface disposed on the opposite side from the first main surface, an arc-like first groove is formed on the first main surface, an arc-like second groove is disposed on the second main surface so as to correspond to the first groove, the central angle of the first groove is smaller than the central angle of the second groove, and when viewed from a normal direction to the first main surface, the first groove intersects with the axis of symmetry of the second groove above the second groove.

US2014/072841A1 relates to a battery can for a storage battery. A safety valve having a first and a second score groove portion is provided to inner and outer surface of can bottom, can body, or can lid. The first and the second score groove portion face each other, and have a first and a second score groove bottom portion, which have a radius of curvature R, respectively. The R is more than 0.20 mm and less than 1.20 mm, and a distance between the bottom portions is 0.045 to 0.150 mm. The portion, which has the safety valve, is constituted by a plated steel sheet having a steel sheet portion of C content is less than 0.040 mass %, S content is less than 0.020 mass %, and tensile strength TS is less than 400 MPa, and a plate layer formed on a surface of the steel sheet portion.

JP2000 233247A relates to a surface-treated steel sheet having the composition consisting of, by weight, <=0.20% C, <=0.5% Si, <=1.0% Mn, <=0.15% P, <=0.100% S, <=0.150% soldering Al, <=0.0150% N, and <=0.070% B, and <=0.10% one or two or more Nb and Ti, as necessary, and the balance Fe with inevitable impurities, and having a resin film of 5-100 µm in thickness on an outermost layer of front and back sides.

### Summary

Embodiments of the present application provide a pressure relief apparatus, a battery cell, a battery, and a power consumption device, where the safety of the battery cell can be effectively improved.

The present invention provides a pressure relief apparatus, applied in a battery cell, as set out in claim 1. Other aspects of the invention are set out in the dependent claims. Aspects and embodiments discussed in the detailed description that do not fall within the scope of the claims are not part of the present invention.

In the foregoing technical solution, the pressure relief grooves are disposed on both the first surface and the second surface of the pressure relief body to obtain a relatively low residual thickness and reduce a thickness of the weak portion, so that the weak portion is prone to rupture to reduce a detonation pressure of the pressure relief apparatus, and the pressure relief body can release pressure in a timely manner to reduce risks of fire, explosion, and the like in the battery cell and effectively improve the safety of the battery cell.

In some embodiments, a distance between the first surface and the second surface is a first distance, and a ratio of a minimum thickness of the weak portion to the first distance is 0.12-0.5. If the ratio of the minimum thickness of the weak portion to the first distance is too small, the minimum thickness of the weak portion is smaller, and the weak portion will rupture in a forming process. Even if the weak portion does not rupture, because the strength of the pressure relief body is low, the weak portion is prone to rupture to release pressure in a vibration environment or in a case that the pressure or the temperature inside the battery cell is far from the threshold, which affects the service life of the battery cell. If the ratio of the minimum thickness of the weak portion to the first distance is too large, the minimum thickness of the weak portion is larger, and the weak portion will not rupture to release pressure when the pressure or temperature inside the battery cell of the weak portion has reached the threshold, and untimely pressure relief will cause accidents such as fire and explosion of the battery cell. Therefore, the ratio of the minimum thickness of the weak portion to the first distance is set to 0.12-0.5, which not only ensures that the pressure relief apparatus can release pressure in a timely manner when the pressure inside the battery cell reaches the threshold, but can also ensure that the pressure relief apparatus has sufficient strength before pressure relief.

In some embodiments, the pressure relief groove extends in a circumferential direction of the pressure relief body and confines a pressure relief portion; and the pressure relief portion is configured to open with the weak portion as a boundary when the pressure or temperature inside the battery cell reaches the threshold, so as to release the pressure inside the battery cell. This structure effectively increases a pressure relief area of the pressure relief apparatus, further increases a pressure relief rate of the pressure relief apparatus, reduces the risks of fire, explosion, and the like in the battery cell, and improves the safety of the battery cell.

In some embodiments, there is a distance between two ends of the pressure relief groove in the circumferential direction of the pressure relief body. In this case, when the weak portion ruptures to release pressure, the area between the two ends of the pressure relief groove does not rupture, so that the pressure relief portion opens in an outward flipping manner, and the pressure relief portion is prevented from falling off as a whole during pressure relief.

In some embodiments, the pressure relief groove is in an arc shape extending in the circumferential direction of the pressure relief body. The shape of the pressure relief groove with this structure is regular, so that the pressure relief portion is easy to machine and can open regularly during pressure relief.

In some embodiments, the pressure relief body further has an outer surface and an inner surface, the outer surface is oppositely disposed to the inner surface in the thickness direction, and the pressure relief portion is configured to open from the inner surface towards the outer surface when the pressure or the temperature inside the battery cell reaches the threshold; and the pressure relief body is provided with a concave portion, the concave portion is recessed, in the thickness direction, from the outer surface in a direction towards the inner surface, and a bottom surface of the concave portion forms the first surface. The concave portion can provide a space for avoidance when the pressure relief portion opens outwards, and even if there is an obstacle on the outer surface of the pressure relief body, the pressure relief portion can open normally, thereby reducing a risk of being unable to open the pressure relief portion due to abutment of the obstacle against the outer surface.

In some embodiments, a convex portion protruding from the inner surface is formed at a position, corresponding to the concave portion, of the pressure relief body, and a face, away from the inner surface, of the convex portion forms the second surface in the thickness direction. The convex portion can improve the strength of the area where the concave portion is disposed in the pressure relief body, and avoid a problem of low partial strength caused by the concave portion in the pressure relief body.

In some embodiments, the pressure relief groove includes: two groove side surfaces facing each other along a width direction of the pressure relief groove; and a groove bottom surface connected to the two groove side surfaces, where the weak portion is formed in an area between the groove bottom surfaces of the two pressure relief grooves. The pressure relief groove of this structure is easy to machine and form, and the pressure relief groove may be formed by stamping.

In some embodiments, the groove bottom surface is an arc surface recessed in a depth direction of the pressure relief groove. With this structure, the weak portion is of a structure with gradually decreasing thickness from two sides to a middle position, the weak portion can rupture more easily from the weakest position in the middle during pressure relief, and the pressure relief apparatus can rupture to release pressure in a timely manner when the pressure or temperature inside the battery cell reaches the threshold.

In some embodiments, the groove bottom surface comprises a bottom plane and arc chamfer surfaces, and the bottom plane is connected to each of the groove side surfaces through one of the arc chamfer surfaces. This structure enables the middle area of the weak portion (the area, corresponding to the bottom plane, of the weak portion) to be the weakest, enables the weak portion to be prone to rupture, and ensures that the weak portion can rupture to release pressure in a timely manner when the pressure or temperature inside the battery cell reaches the threshold.

In some embodiments, a distance between the two groove side surfaces gradually decreases in the depth direction of the pressure relief groove. This structure can effectively reduce the width of the weak portion, so that the weak portion is prone to rupture when the pressure or temperature inside the battery cell reaches the threshold.

An anti-oxidation layer is formed on the surface of the pressure relief body, and the anti-oxidation layer extends along a wall surface of the pressure relief groove in an area where the pressure relief groove is disposed. The anti-oxidation layer protects the pressure relief body to avoid oxidation of the pressure relief body. Of course, due to the extension of the anti-oxidation layer along the wall surface of the pressure relief groove in the area where the pressure relief groove is disposed, the anti-oxidation layer can also protect the area where the pressure relief groove is disposed in the pressure relief body, thereby reducing the risk of reduced strength of the weak portion due to oxidation of the pressure relief body in the area where the pressure relief groove is disposed.

A thickness of the anti-oxidation layer in the area of the pressure relief groove is smaller than that of the anti-oxidation layer in remaining areas. This reduces an impact of the anti-oxidation layer in the area of the pressure relief groove on the weak portion and ensures that the weak portion can rupture to release pressure in a timely manner when the pressure or temperature inside the battery cell reaches the threshold.

In a second aspect, an embodiment of the present application provides a battery cell, including; an electrode assembly; and a shell, configured for accommodating the electrode assembly, where the shell includes the pressure relief apparatus provided in any of the foregoing embodiments of the first aspect.

In some embodiments, the shell further includes a shell body, the shell body is configured for accommodating the electrode assembly, the shell body has an opening, and the pressure relief body is configured for covering the opening.

In a third aspect, an embodiment of the present application provides a battery, including: the battery cell provided in any of the foregoing embodiments of the second aspect; and a box body configured for accommodating the battery cell.

In a fourth aspect, an embodiment of the present application provides a power consumption device, including the battery provided in any of the foregoing embodiments of the third aspect.

In a fifth aspect, an embodiment of the present application provides a manufacturing method for a pressure relief apparatus, including: providing a pressure relief body, where the pressure relief body has a first surface and a second surface oppositely disposed in a thickness direction thereof; and machining a pressure relief groove on each of the first surface and the second surface, so that the pressure relief groove on the first surface and the pressure relief groove on the second surface are oppositely disposed in the thickness direction of the pressure relief apparatus, a weak portion is formed between the pressure relief groove on the first surface and the pressure relief groove on the second surface, and the weak portion is configured to rupture when a pressure or a temperature inside a battery cell reaches a threshold, so as to release the pressure inside the battery cell.

In a sixth aspect, an embodiment of the present application further provides a manufacturing device for a pressure relief apparatus, including: a provision apparatus, configured to provide a pressure relief body, where the pressure relief body has a first surface and a second surface oppositely disposed in a thickness direction thereof; and a machining apparatus, configured to machine a pressure relief groove on each of the first surface and the second surface, so that the pressure relief groove on the first surface and the pressure relief groove on the second surface are oppositely disposed in the thickness direction of the pressure relief apparatus, a weak portion is formed between the pressure relief groove on the first surface and the pressure relief groove on the second surface, and the weak portion is configured to rupture when a pressure or a temperature inside a battery cell reaches a threshold, so as to release the pressure inside the battery cell.

### Brief Description of Drawings

In order to illustrate the technical solutions in the embodiments of the present application more clearly, brief description will be made below to the drawings required in the embodiments. It should be understood that the following drawings show only some embodiments of the present application and should not be regarded as limiting the scope, and other relevant drawings may be obtained based on these drawings by those of ordinary skill in the art without any creative efforts.
FIG. 1 is a structural schematic diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a structural schematic diagram of a pressure relief apparatus shown in FIG. 3;
FIG. 5 is a partial view of the pressure relief apparatus shown in FIG. 4;
FIG. 6 is an A-A cross-sectional view of the pressure relief apparatus shown in FIG. 4;
FIG. 7 is a partially enlarged view of the pressure relief apparatus according to some embodiments of the present application;
FIG. 8 is a partially enlarged view of the pressure relief apparatus according to the other embodiments of the present application;
FIG. 9 is a partially cross-sectional view of the pressure relief apparatus according to the other embodiments of the present application;
FIG. 10 is a flowchart of a manufacturing method for a pressure relief apparatus according to some embodiments of the present application; and
FIG. 11 is a schematic block diagram of a manufacturing device for a pressure relief apparatus according to some embodiments of the present application.

Marking description: 10 - box body; 11 - first portion; 12 - second portion; 20 - battery cell; 21 - electrode assembly; 22 - shell; 23 - end cover; 24 - pressure relief apparatus; 241 - pressure relief body; 2411 - first surface; 2412 - second surface; 2413 - weak portion; 2414 - pressure relief portion; 2415 - outer surface; 2415a - concave portion; 2415b - welding groove; 2416 - inner surface; 2416a - convex portion; 2416b - protrusion; 2417 - anti-oxidation layer; 242 - pressure relief groove; 2421 - groove side surface; 2422 - groove bottom surface; 2422a - bottom plane; 2422b - arc chamfer surface; 25 - electrode terminal; 26 - current collecting member; 100 - battery; 200 - controller; 300 - motor; 1000 - vehicle; 2000 - manufacturing device; 2100 - provision apparatus; 2200 - machining apparatus; X - width direction; Y - circumferential direction; Z - thickness direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. It will be apparent that, the described embodiments are some of the embodiments of the present application, not all of them. All other embodiments obtained by those of ordinary skill in the art based on the embodiments of the present application without creative efforts shall fall within the scope of protection of the present application.

Unless otherwise defined, all technological and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and claims of the present application as well as the brief description of the drawings described above are intended to cover non-exclusive inclusion. In the specification and claims of the present application or in the foregoing drawings, the terms "first", "second", and the like are used to distinguish different objects and are not used to describe a specific sequence or a primary and secondary relation.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be generally understood, for example, the "connection" may be a fixed connection, a detachable connection, an integral connection, a direct connection, or an indirect connection through a medium, or an internal communication of two elements. Those of ordinary skill in the art may appreciate the specific meanings of the foregoing terms in the present application to specific circumstances.

The term "and/or" in the present application describes only an association relationship for describing associated objects and represents that three relationships may exist. For example, A and/or B may represent the following three cases: Only A exists, both A and B exist, and only B exists. In addition, the character "/" in the present application generally indicates an "or" relationship between successive associated objects.

In the embodiments of the present application, the same reference numerals represent the same components, and for simplicity, detailed descriptions of the same components are omitted in different embodiments. It should be understood that dimensions such as thickness, length and width of various components and dimensions such as overall thickness, length and width of integrated apparatuses in the embodiments of the present application shown in the drawings are merely illustrative examples and should not constitute any limitations on the present application.

In the present application, the term "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may also be cylindrical, flat, cuboid, or in other shapes, which are not limited by the embodiments of the present application. The battery cells are generally divided into three types according to the way of packaging: cylindrical battery cells, square battery cells, and soft package battery cells, which are not limited in the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery generally includes a box body for packaging one or more battery cells. The box body may prevent liquid or other foreign matters from affecting the charging or discharging of the battery cells.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like. In addition, the electrode assembly may be of a winding structure or a laminated structure, and the embodiments of the present application are not limited thereto.

The development of battery technologies need to simultaneously consider many design factors, such as energy density, cycle life, discharge capacity, charge and discharge rate, and other performance parameters. In addition, the safety of the battery should also be considered.

To ensure the safety of a battery cell, a pressure relief apparatus is generally disposed inside the battery cell. When a pressure or temperature inside the battery cell reaches a threshold, the pressure inside the battery cell is released through the pressure relief apparatus to ensure the safety of the battery cell.

The inventor noticed that even if the pressure relief apparatus is disposed inside the battery cell, safety issues such as fire and explosion may still occur. The inventor found through further research that, in related technologies, a pressure relief groove is generally disposed on a pressure relief body of the pressure relief apparatus, and during pressure relief, the pressure relief body ruptures from a position where the pressure relief groove is disposed to achieve a purpose of pressure relief. The inventor found through in-depth research that the pressure relief groove is generally disposed on a single side of the pressure relief body; and to meet design requirements and ensure timely pressure relief when the pressure or temperature inside the battery cell reaches the threshold, the pressure relief groove should be machined to a certain depth, so that a residual thickness of the pressure relief body after the pressure relief groove is disposed will not be too thick, but limited by a machining technology and a material of the pressure relief body, in a case that the pressure relief body is thick and/or the material of the pressure relief body is hard, the residual thickness barely meets the design requirements if the pressure relief groove is machined on the single side of the pressure relief body, so that a detonation pressure of the pressure relief apparatus is high, and the pressure relief apparatus cannot release pressure when it is supposed to release pressure and therefore cannot release the pressure inside the battery cell in a timely manner, resulting in safety issues such as fire and explosion of the battery cell.

In view of this, the embodiments of the present application provide a pressure relief apparatus, where a pressure relief groove is disposed on both a first surface and a second surface of a pressure relief body that are opposite, a weak portion is formed between the pressure relief groove on the first surface and the pressure relief groove on the second surface, and the weak portion is configured to rupture when a pressure or temperature inside a battery cell reaches a threshold to release the pressure inside the battery cell.

In such a pressure relief apparatus, the pressure relief groove is disposed on both the first surface and the second surface of the pressure relief body to obtain a relatively low residual thickness and reduce a thickness of the weak portion, so that the weak portion is prone to rupture to reduce a detonation pressure of the pressure relief apparatus, and the pressure relief body can release pressure in a timely manner to reduce risks of fire, explosion, and the like in the battery cell and effectively improve the safety of the battery cell.

In addition, because the pressure relief groove is disposed on both the first surface and the second surface of the pressure relief body, difficulties in forming can be effectively reduced, machining accuracy can be ensured, the thickness of the weak portion can be accurately controlled, and the thickness of the weak portion meets the detonation requirements.

The pressure relief apparatus described in the embodiments of the present application is applicable to battery cells, batteries, and power consumption devices using batteries.

The power consumption devices may be vehicles, mobile phones, portable devices, notebook computers, ships, spacecrafts, electric toys, electric tools, and the like. The vehicles may be oil-fueled vehicles, gas-fueled vehicles, or new energy vehicles, and the new energy vehicles may be pure electric vehicles, hybrid electric vehicles, extended range vehicles, or the like; the spacecrafts include airplanes, rockets, space shuttles, spaceships, and the like; the electric toys include fixed or mobile electric toys, such as game consoles, electric car toys, electric boat toys, and electric plane toys; and the electric tools include electric metal cutting tools, electric grinding tools, electric assembly tools, and railway electric tools, such as electric drills, electric grinders, electric wrenches, electric screwdrivers, electric hammers, electric impact drills, concrete vibrators, and electric planers. The embodiments of the present application do not impose special limitations on the foregoing power consumption devices.

For convenient description, the following embodiments are described by an example of a vehicle as a power consumption device.

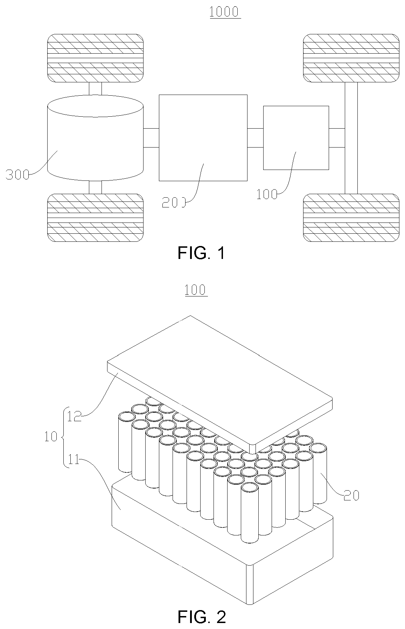

Refer to FIG. 1. FIG. 1 is a structural schematic diagram of a vehicle 1000 according to some embodiments of the present application. A battery 100 is disposed inside the vehicle 1000, and the battery 100 may be disposed at a bottom, head, or tail of the vehicle 1000. The battery 100 may be used for supplying power to the vehicle 1000. For example, the battery 100 may be used as an operation power supply of the vehicle 1000.

The vehicle 1000 may further include a controller 200 and a motor 300. The controller 200 is used for controlling the battery 100 to supply power to the motor 300, for example, for the working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 according to some embodiments of the present application. The battery 100 includes a box body 10 and battery cells 20, where the box body 10 is used for accommodating the battery cells 20.

The box body 10 is a component that accommodates the battery cells 20, the box body 10 provides a space for the battery cells 20, and the box body 10 may have various structures. In some embodiments, the box body 10 may include a first portion 11 and a second portion 12, and the first portion 11 and the second portion 12 cover each other to confine the space for accommodating the battery cells 20. The first portion 11 and the second portion 12 may be in various shapes, such as cuboid or cylindrical. The first portion 11 may be of a hollow structure with an open side, the second portion 12 may also be of a hollow structure with an open side, and the open side of the second portion 12 covers the open side of the first portion 11 to form the box body 10 with the accommodating space. Alternatively, the first portion 11 is of a hollow structure with an open side, the second portion 12 is of a plate-like structure, and the second portion 12 covers the open side of the first portion 11 to form the box body 10 with the accommodating space. The first portion 11 and the second portion 12 may be sealed through a sealing element, which may be a sealing ring, a sealant, or the like.

There may be one or more battery cells 20 in the battery 100. If there is a plurality of battery cells 20, the plurality of battery cells 20 may be connected in series, parallel, or series-parallel. The series-parallel connection refers to both series and parallel connection in the plurality of battery cells 20. The plurality of battery cells 20 may be first connected in series, parallel, or series-parallel to form a battery module, and then a plurality of battery modules may be connected in series, parallel, or series-parallel to form a whole accommodated in the box body 10. Alternatively, all the battery cells 20 may be directly connected in series, parallel, or series-parallel together, and then the whole formed by all the battery cells 20 is accommodated in the box body 10.

In some embodiments, the battery 100 may further include a converging component, and the plurality of battery cells 20 may be electrically connected through the converging component to implement the series, parallel, or series-parallel connection of the plurality of battery cells 20. The converging component may be a metal conductor, such as copper, iron, aluminum, stainless steel, or aluminum alloy.

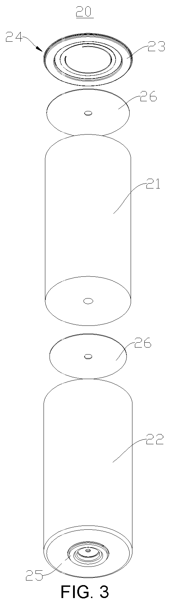

Refer to FIG. 3. FIG. 3 is an exploded view of a battery cell 20 according to some embodiments of the present application. The battery cell 20 may include a shell and an electrode assembly 21, where the shell is used for accommodating the electrode assembly 21. The shell may include a shell body 22, an end cover 23, and a pressure relief apparatus 24.

The shell body 22 is a component used for accommodating the electrode assembly 21, and the shell body 22 may be of a hollow structure with an opening formed at one end, or the shell body 22 may be of a hollow structure with openings formed at two opposite ends. The shell body 22 may be in various shapes, such as cylindrical or cuboid. A material of the shell body 22 may be various, such as copper, iron, aluminum, steel, or aluminum alloy.

The electrode assembly 21 is a component that undergoes electrochemical reactions in the battery cell 20. The electrode assembly 21 may include a positive electrode sheet, a negative electrode sheet, and a separator. The electrode assembly 21 may be of a winding structure formed by winding the positive electrode sheet, the separator, and the negative electrode sheet, or a stacked structure formed by stacking the positive electrode sheet, the separator, and the negative electrode sheet. The electrode assembly 21 has a positive tab and a negative tab, the positive tab may be a portion not coated with the positive electrode active material layer on the positive electrode sheet, and the negative tab may be a portion not coated with the negative electrode active material layer on the negative electrode sheet.

The end cover 23 is a component that is configured to close to the opening of the shell body 22 to isolate an internal environment of the battery cell 20 from an external environment. The end cover 23 is closed to the opening of the shell body 22, and the end cover 23 and the shell body 22 jointly confine a sealed space for accommodating the electrode assembly 21, an electrolyte, and other components. A shape of the end cover 23 may be adapted to that of the shell body 22. For example, the shell body 22 is of a cuboid structure, and the end cover 23 is of a rectangular plate structure matching the shell body 22. For another example, the shell body 22 is of a cylindrical structure, and the end cover 23 is of a circular plate structure matching the shell body 22. The end cover 23 may be made of various materials, such as copper, iron, aluminum, steel, or aluminum alloy.

There is one or two end covers 23 in the battery cell 20. If the shell body 22 is of a hollow structure with an opening formed at one end, one end cover 23 is correspondingly disposed. If the shell body 22 is of a hollow structure with openings formed at two ends, two end covers 23 are correspondingly disposed, and the two end covers 23 are closed to the two openings of the shell body 22 separately.

An electrode terminal 25 may be disposed in the battery cell, the electrode terminal 25 may be disposed on the end cover 23 or the shell body 22, and the electrode terminal 25 is used for electrical connection with the electrode assembly 21 to output electrical energy of the battery cell 20. In an embodiment where there are two end covers 23 in the battery cell 20, the electrode terminal 25 may be disposed on the two end covers 23, the electrode terminal 25 on one end cover 23 is electrically connected to the positive tab of the electrode assembly 21, and the electrode terminal 25 on the other end cover 23 is electrically connected to the negative tab of the electrode assembly 21. As shown in FIG. 3, in an embodiment where there is one end cover 23 in the battery cell 20, the electrode terminal 25 may be disposed on only the shell, the electrode terminal 25 may be electrically connected to the positive tab of the electrode assembly 21, and the end cover 23 is electrically connected to the negative tab of the electrode assembly 21.

A current collecting member 26 may be further disposed in the battery cell 20 to achieve the electrical connection between the electrode terminal 25 and the tab or the end cover 23 and the tab. For example, there is one end cover 23 in the battery cell 20, the electrode terminal 25 on the shell body 22 is connected to the positive tab of the electrode assembly 21 by means of a current collecting member 26, and the end cover 23 is connected to the negative tab of the electrode assembly 21 by means of another current collecting member 26.

The pressure relief apparatus 24 is a component that releases the pressure inside the battery cell 20. When the pressure or temperature inside the battery cell 20 reaches a threshold, the pressure inside the battery cell 20 is released through the pressure relief apparatus 24. A specific structure of the pressure relief apparatus 24 will be explained in detail below with reference to the accompanying drawings.

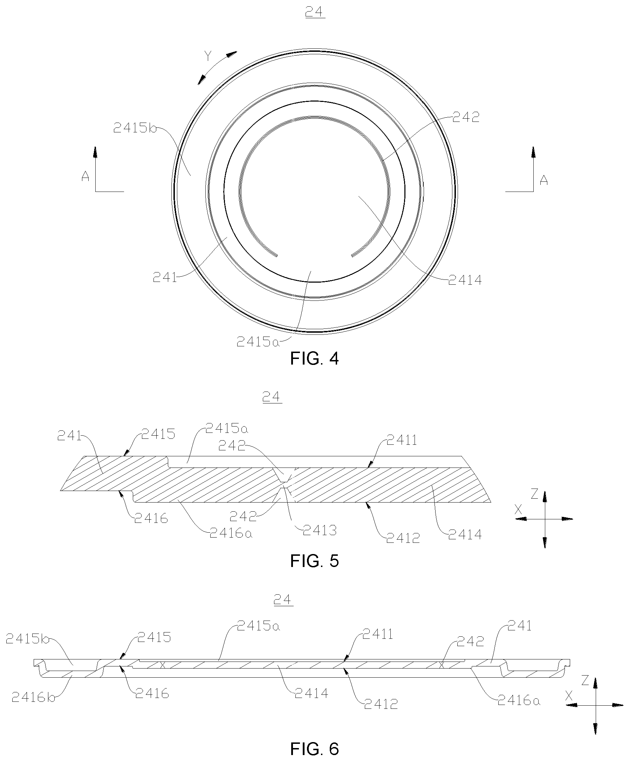

Refer to FIG. 4 and FIG. 5. FIG. 4 is a structural schematic diagram of the pressure relief apparatus 24 shown in FIG. 3, and FIG. 5 is a partial view of the pressure relief apparatus 24 shown in FIG. 4. An embodiment of the present application provides a pressure relief apparatus 24 used for a battery cell 20. The pressure relief apparatus 24 includes a pressure relief body 241 and two pressure relief grooves 242. The pressure relief body 241 has a first surface 2411 and a second surface 2412 oppositely disposed in its thickness direction Z. The two pressure relief grooves 242 are oppositely disposed in the thickness direction Z of the pressure relief apparatus 24 and disposed on the first surface 2411 and the second surface 2412 separately. A weak portion 2413 is formed between the two pressure relief grooves 242, and the weak portion 2413 is configured to rupture when the pressure or temperature inside the battery cell 20 reaches a threshold to release the pressure inside the battery cell 20.

The pressure relief body 241 may be either at the end cover 23 or the shell body 22. The pressure relief body 241 may be an independent component mounted on the end cover 23, or an independent component mounted on the shell body 22, such as an explosion-proof valve or a rupture disc. A shape of the pressure relief body 241 may be various. For example, the pressure relief body 241 is the end cover 23, and the pressure relief body 241 may be rectangular, circular, or the like. For example, the pressure relief body 241 is made of a hard material, and a tensile strength of the pressure relief body 241 is 108 MPa to 384 MPa steel. The pressure relief body 241 may be made of a metal material, such as copper, iron, aluminum, steel, or aluminum alloy.

In the battery cell 20, the first surface 2411 of the pressure relief body 241 may be an outermost surface of the pressure relief body 241, or a step surface at a distance from the outermost surface of the pressure relief body 241 and towards an outer side of the battery cell 20. The second surface 2412 of the pressure relief body 241 may be an innermost surface of the pressure relief body 241, or a step surface at a distance from the innermost surface of the pressure relief body 241 and towards an inner side of the battery cell 20. For example, the first surface 2411 and the second surface 2412 are planes parallel to each other.

In the embodiments of the present application, the number of pressure relief grooves 242 on the first surface 2411 and the second surface 2412 is not limited, and there may be one or more pressure relief grooves 242 on the first surface 2411 and the second surface 2412, as long as the pressure relief groove(s) 242 on the first surface 2411 corresponds to the pressure relief groove(s) 242 on the second surface 2412 one to one. The pressure relief groove 242 may be formed in various ways, such as stamping or milling, which is not specially limited by the embodiments of the present application. The pressure relief groove 242 may be a straight groove extending along a straight line, or a bent groove or arc groove extending in a circumferential direction Y of the pressure relief body 241, where the bent groove may be a polygonal groove, such as a rectangular groove.

The weak portion 2413 is a portion of the pressure relief body 241 located between two pressure relief grooves 242, namely, a residual portion of an area where the pressure relief groove 242 is disposed in the pressure relief body 241.

In the embodiments of the present application, the pressure relief groove 242 is disposed on both the first surface 2411 and the second surface 2412 of the pressure relief body 241 to obtain a relatively low residual thickness and reduce a thickness of the weak portion 2413, so that the weak portion 2413 is prone to rupture to reduce a detonation pressure of the pressure relief apparatus 24, and the pressure relief body 241 can release pressure in a timely manner to reduce risks of fire, explosion, and the like in the battery cell 20 and effectively improve the safety of the battery cell 20.

In some embodiments, a distance between the first surface 2411 and the second surface 2412 is a first distance, and a ratio of a minimum thickness of the weak portion 2413 to the first distance is 0.12-0.5.

The first distance is a thickness of the pressure relief body 241 in an area between the first surface 2411 and the second surface 2412. The weak portion 2413 may be of an equal thickness structure in any area, or a variable thickness structure in a plurality of areas. "The minimum thickness of the weak portion 2413" does not limit the weak portion 2413 to a thickened structure. When the weak portion 2413 is of the equal thickness structure, the thickness at any position of the weak portion 2413 is the minimum thickness, and the minimum thickness of the weak portion 2413 is also a maximum thickness of the weak portion 2413.

If the ratio of the minimum thickness of the weak portion 2413 to the first distance is too small, the minimum thickness of the weak portion 2413 is smaller, and the weak portion 2413 will rupture in a forming process. Even if the weak portion 2413 does not rupture, because the strength of the pressure relief body 241 is low, the weak portion 2413 is prone to rupture to release pressure in a vibration environment or in a case that the pressure or temperature inside the battery cell 20 is far from the threshold, which affects the service life of the battery cell 20. If the ratio of the minimum thickness of the weak portion 2413 to the first distance is too large, the minimum thickness of the weak portion 2413 is larger, and the weak portion 2413 will not rupture to release pressure when the pressure or temperature inside the battery cell 20 of the weak portion 2413 has reached the threshold, and untimely pressure relief will cause accidents such as fire and explosion of the battery cell 20.

In this embodiment, the ratio of the minimum thickness of the weak portion 2413 to the first distance is set to 0.12-0.5, which not only ensures that the pressure relief apparatus 24 can release pressure in a timely manner when the pressure inside the battery cell 20 reaches the threshold, but can also ensure that the pressure relief apparatus 24 has sufficient strength before pressure relief.

In some embodiments, the pressure relief groove 242 extends in the circumferential direction Y of the pressure relief body 241 and confines a pressure relief portion 2414. The pressure relief portion 2414 is configured to open with the weak portion 2413 as a boundary when the pressure or temperature inside the battery cell 20 reaches the threshold, so as to release the pressure inside the battery cell 20.

The pressure relief groove 242 may be of a closed loop structure that extends in the circumferential direction Y of the pressure relief body 241 and is connected end to end, for example, the pressure relief groove 242 is circular, elliptical, rectangular, or the like. The pressure relief groove 242 may alternatively be a non-closed loop structure that extends in the circumferential direction Y of the pressure relief body 241 and has two ends at a distance, for example, the pressure relief groove 242 is in a shape of "C", "U" with a rightward opening, or the like.

The pressure relief portion 2414 is an area confined by the pressure relief groove 242 on the pressure relief body 241, and the weak portion 2413 is located at an edge of the pressure relief portion 2414. When the pressure or temperature inside the battery cell 20 reaches the threshold, the weak portion 2413 ruptures, so that the pressure relief portion 2414 opens with the weak portion 2413 as the boundary. After the pressure relief portion 2414 opens, an opening portion will be formed at a position of the pressure relief body 241 corresponding to the pressure relief portion 2414, and emissions (gas, electrolyte, and the like) inside the battery cell 20 may be discharged through the opening portion to achieve the purpose of releasing the pressure inside the battery cell 20. In the opening process of the pressure relief portion 2414, the pressure relief portion 2414 may open by detaching from the pressure relief body 241, or by flipping from the inside out.

In this embodiment, the pressure relief groove 242 extends in an axial direction of the pressure relief body 241 and confines the pressure relief portion 2414, thereby effectively increasing a pressure relief area of the pressure relief apparatus 24, further increasing a pressure relief rate of the pressure relief apparatus 24, reducing the risks of fire, explosion, and the like in the battery cell 20, and improving the safety of the battery cell 20.

In some embodiments, there is a distance between two ends of the pressure relief groove 242 in the circumferential direction Y of the pressure relief body 241.

There is the distance between the two ends of the pressure relief groove 242 in the circumferential direction Y of the pressure relief body 241, that is, there is the distance between the two ends of the pressure relief groove 242 in its extension direction. It may be understood that the pressure relief groove 242 is of the non-closed structure with the two ends at the distance.

In this embodiment, there is the distance between the two ends of the pressure relief groove 242 in the circumferential direction Y of the pressure relief body 241. When the weak portion 2413 ruptures to release pressure, the area between the two ends of the pressure relief groove 242 does not rupture, so that the pressure relief portion 2414 opens in an outward flipping manner, and the pressure relief portion 2414 is prevented from falling off as a whole during pressure relief.

In some embodiments, the pressure relief groove 242 is in an arc shape extending in the circumferential direction Y of the pressure relief body 241.

As shown in FIG. 2, a circular pressure relief body 241 is used as an example, and the pressure relief groove 242 may be coaxial with the pressure relief body 241.

For example, a central angle of the pressure relief groove 242 is not less than 180°. Preferably, the central angle of the pressure relief groove 242 is greater than 270°.

In this embodiment, the pressure relief groove 242 is arc-shaped, and the shape of the pressure relief groove 242 with this structure is regular, so that the pressure relief portion 2414 is easy to machine and can open regularly during pressure relief.

In some embodiments, with continued reference to FIG. 5, the pressure relief body 241 further has an outer surface 2415 and an inner surface 2416, the outer surface 2415 is opposite to the inner surface 2416 in the thickness direction Z of the pressure relief apparatus 24, and the pressure relief portion 2414 is configured to open from the inner surface 2416 to the outer surface 2415 when the pressure or temperature inside the battery cell 20 reaches the threshold. The pressure relief body 241 is provided with a concave portion 2415a, the concave portion 2415a is recessed from the outer surface 2415 to the inner surface 2416 in the thickness direction Z of the pressure relief apparatus 24, and a bottom surface of the concave portion 2415a forms the first surface 2411.

In the battery cell 20, the outer surface 2415 is a surface, facing the outer side of the battery cell 20, of the pressure relief body 241, and the inner surface 2416 is a surface, facing the inner side of the battery cell 20, of the pressure relief body 241. The concave portion 2415a is recessed from the outer surface 2415 to the inner surface 2416, the bottom surface of the concave portion 2415a forms the first surface 2411, and the first surface 2411 is a step surface of the pressure relief body 241. A shape of the concave portion 2415a may be various, such as circular, rectangular, or the like.

In the battery cell 20, when the pressure or temperature inside the battery cell 20 reaches the threshold, the pressure relief portion 2414 will open from the inner surface 2416 to the outer surface 2415, that is, the pressure relief portion 2414 will open from the inside of the battery cell 20 to the outside.

In the thickness direction Z of the pressure relief body 241, a distance between the outer surface 2415 and the inner surface 2416 is a second distance, which may be equal or unequal to the first distance. If the second distance is unequal to the first distance, the second distance may be greater than the first distance, or the second distance may be less than the first distance.

In this embodiment, the pressure relief body 241 is provided with the concave portion 2415a, the concave portion 2415a can provide a space for avoidance when the pressure relief portion 2414 opens outwards, and even if there is an obstacle on the outer surface 2415 of the pressure relief body 241, the pressure relief portion 2414 can open normally, thereby reducing a risk of being unable to open the pressure relief portion 2414 due to abutment of the obstacle against the outer surface 2415.

In some embodiments, a convex portion 2416a protruding from the inner surface 2416 is formed at a position, corresponding to the concave portion 2415a, of the pressure relief body 241, and a face, away from the inner surface 2416, of the convex portion 2416a forms the second surface 2412 in the thickness direction Z of the pressure relief apparatus 24.

A shape of the convex portion 2416a may be adapted to that of the concave portion 2415a. For example, the concave portion 2415a is circular, and the convex portion 2416a may be correspondingly circular. For another example, the concave portion 2415a is rectangular, and the convex portion 2416a may be correspondingly rectangular. The convex portion 2416a has a peripheral surface connected between the second surface 2412 and the inner surface 2416, and the peripheral surface is located at a periphery of the concave portion 2415a. For example, both the concave portion 2415a and the convex portion 2416a are circular, the concave portion 2415a is coaxial with the convex portion 2416a, and a diameter of the peripheral surface of the convex portion 2416a is greater than that of the concave portion 2415a.

In actual production, the concave portion 2415a may be formed on one side of the pressure relief body 241 by stamping, and the convex portion 2416a may be correspondingly formed on the other side of the pressure relief body 241.

In this embodiment, the convex portion 2416a protruding from the inner surface 2416 is formed at the position, corresponding to the concave portion 2415a, of the pressure relief body 241, where the convex portion 2416a can improve the strength of the area where the concave portion 2415a is disposed in the pressure relief body 241, and avoid a problem of low partial strength caused by the concave portion 2415a in the pressure relief body 241.

In some embodiments, refer to FIG. 6. FIG. 6 is an A-A cross-sectional view of the pressure relief apparatus 24 shown in FIG. 4. A welding groove 2415b is further disposed on the outer surface 2415, a protrusion 2416b protruding from the inner surface 2416 is formed at a position, corresponding to the welding groove 2415b, of the pressure relief body 241, and both the welding groove 2415b and the protrusion 2416b are located at a periphery of the convex portion 2416a. The protrusion 2416b is used for abutting against and welding with the current collecting member 26.

For example, both the welding groove 2415b and the protrusion 2416b are of circular structures surrounding the convex portion 2416a.

In this embodiment, the pressure relief body 241 may be used as the end cover 23 in the battery cell 20 to cover the opening of the shell body 22. When the pressure relief body 241 is welded with the current collecting member 26, the pressure relief body 241 may be welded in the area of the welding groove 2415b to weld the protrusion 2416b with the current collecting member 26 together, and a welding mark formed by welding the protrusion 2416b with the current collecting member 26 will be formed in the welding groove 2415b.

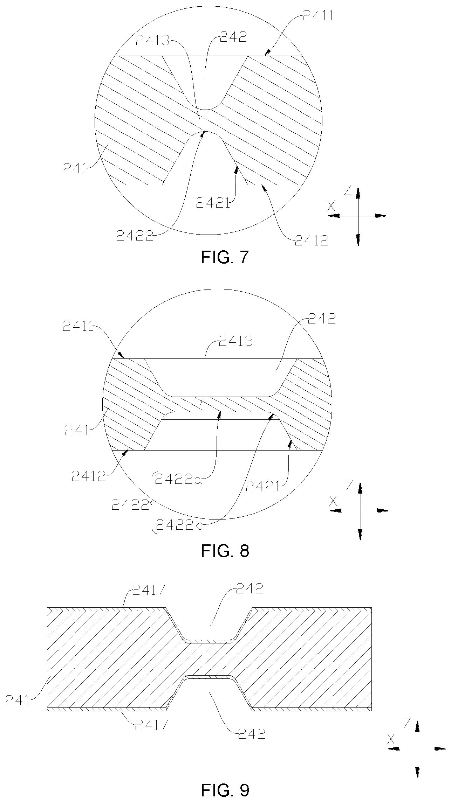

In some embodiments, refer to FIG. 7 and FIG. 8, where FIG. 7 is a partially enlarged view of the pressure relief apparatus 24 according to some embodiments of the present application, and FIG. 8 is a partially enlarged view of the pressure relief apparatus 24 according to the other embodiments of the present application. The pressure relief groove 242 includes a groove bottom surface 2422 and two groove side surfaces 2421. The two groove side surfaces 2421 face each other in a width direction X of the pressure relief groove 242. The groove bottom surface 2422 is connected to the two groove side surfaces 2421. The weak portion 2413 is formed in an area between the groove bottom surfaces 2422 of the two pressure relief grooves 242.

The two groove side surfaces 2421 of the pressure relief groove 242 may be parallel to each other or tilt towards each other. The groove bottom surface 2422 of the pressure relief groove 242 may be flat or curved.

In this embodiment, the pressure relief groove 242 is easy to machine, and the pressure relief groove 242 may be formed by stamping.

In some embodiments, with reference to FIG. 7, the groove bottom surface 2422 is an arc surface recessed in a depth direction of the pressure relief groove 242.

It may be understood that, for the pressure relief groove 242 disposed on the first surface 2411, the depth direction of the pressure relief groove 242 is a direction from the first surface 2411 to the second surface 2412. For the pressure relief groove 242 disposed on the second surface 2412, the depth direction of the pressure relief groove 242 is a direction from the second surface 2412 to the first surface 2411.

In this embodiment, a distance between arc vertices of the groove bottom surfaces 2422 of the two pressure relief grooves 242 is the minimum thickness of the weak portion 2413.

For example, the groove bottom surface 2422 is tangent to the two groove side surfaces 2421 of the pressure relief groove 242.

In this embodiment, the groove bottom surface 2422 is the arc surface recessed in the depth direction of the pressure relief groove 242, so that the weak portion 2413 is of a structure with gradually decreasing thickness from two sides to a middle position, the weak portion 2413 can rupture more easily from the weakest position in the middle during pressure relief, and the pressure relief apparatus 24 can rupture to release pressure in a timely manner when the pressure or temperature inside the battery cell 20 reaches the threshold.

In some embodiments, with reference to FIG. 8, the groove bottom surface 2422 includes a bottom plane 2422a and arc chamfer surfaces 2422b, and the bottom plane 2422a is connected to each groove side surface 2421 through an arc chamfer surface 2422b.

In this embodiment, a distance between the bottom planes 2422a of the two pressure relief grooves 242 is the minimum thickness of the weak portion 2413.

For example, both the bottom plane 2422a and the groove side surface 2421 are tangent to the arc chamfer surfaces 2422b. In the pressure relief groove 242, the two arc chamfer surfaces 2422b connected to the two groove side surfaces 2421 are symmetrically disposed in the width direction X of the pressure relief groove 242.

In this embodiment, the bottom plane 2422a is connected to each groove side surface 2421 through an arc chamfer surface 2422b, so the machining is easy, and smooth transition is achieved between the groove side surface 2421 and the bottom plane 2422a. This structure enables the middle area of the weak portion 2413 (the area, corresponding to the bottom plane 2422a, of the weak portion 2413) to be the weakest, enables the weak portion 2413 to be prone to rupture, and ensures that the weak portion 2413 can rupture to release pressure in a timely manner when the pressure or temperature inside the battery cell 20 reaches the threshold.

In some embodiments, with continued reference to FIG. 7 and FIG. 8, a distance between the two groove side surfaces 2421 gradually decreases in the depth direction of the pressure relief groove 242.

For example, the two groove side surfaces 2421 of the pressure relief groove 242 are both inclined planes, and the two groove side surfaces 2421 are symmetrically disposed in the width direction X of the pressure relief groove 242.

In this embodiment, the distance between the two groove side surfaces 2421 gradually decreases in the depth direction of the pressure relief groove 242. This structure can effectively reduce the width of the weak portion 2413, so that the weak portion 2413 is prone to rupture when the pressure or temperature inside the battery cell 20 reaches the threshold.

Refer to FIG. 9. FIG. 9 is a partial cross-sectional view of the pressure relief apparatus 24 according to the present application. An anti-oxidation layer 2417 is formed on the surface of the pressure relief body 241, and the anti-oxidation layer 2417 extends along a wall surface of the pressure relief groove 242 in the area where the pressure relief groove 242 is disposed.

For example, the anti-oxidation layer 2417 may be a metal coating located on the surface of the pressure relief body 241. For example, the pressure relief body 241 is a steel layer, and the anti-oxidation layer 2417 is a nickel layer plated on the pressure relief body 241.

The anti-oxidation layer 2417 protects the pressure relief body 241 to avoid oxidation of the pressure relief body 241. It will be apparent that, due to the extension of the anti-oxidation layer 2417 along the wall surface of the pressure relief groove 242 in the area where the pressure relief groove 242 is disposed, the anti-oxidation layer 2417 can also protect the area where the pressure relief groove 242 is disposed in the pressure relief body 241, thereby reducing the risk of reduced strength of the weak portion 2413 due to oxidation of the pressure relief body 241 in the area where the pressure relief groove 242 is disposed.

A thickness of the anti-oxidation layer 2417 in the area of the pressure relief groove 242 is smaller than that of the anti-oxidation layer 2417 in remaining areas.

The remaining areas refer to areas except the area of the pressure relief groove 242 in the pressure relief body 241.

For example, the thickness of the anti-oxidation layer 2417 in an area corresponding to the groove bottom surface 2422 of the pressure relief groove 242 is greater than that of the anti-oxidation layer 2417 in areas corresponding to the groove side surfaces 2421 of the pressure relief groove 242 to improve oxidation resistance of the weak portion 2413.

In this embodiment, the thickness of the anti-oxidation layer 2417 in the area of the pressure relief groove 242 is smaller than that of the anti-oxidation layer 2417 in the remaining areas, which reduces an impact of the anti-oxidation layer 2417 in the area of the pressure relief groove 242 on the weak portion 2413, and ensures that the weak portion 2413 can rupture to release pressure in a timely manner when the pressure or temperature inside the battery cell 20 reaches the threshold.

An embodiment of the present application provides a battery cell 20, including an electrode assembly 21 and a shell for accommodating the electrode assembly 21. The shell includes the pressure relief apparatus 24 provided by any of the foregoing embodiments.

In some embodiments, the shell further includes a shell body 22, the shell body 22 is used for accommodating the electrode assembly 21, the shell body 22 has an opening, and the pressure relief body 241 is used for covering the opening.

It may be understood that the pressure relief body 241 is the end cover 23 in this embodiment.

An embodiment of the present application provides a battery 100, including a box body 10 and the battery cell 20 provided in any of the foregoing embodiments, where the box body 10 is used for accommodating the battery cell 20.

An embodiment of the present application provides a power consumption device, including the battery 100 provided in any of the foregoing embodiments.

Moreover, with reference to FIG. 4 and FIG. 5, an embodiment of the present application provides a pressure relief apparatus 24 for covering an opening of a shell body 22 of a battery cell 20. The pressure relief apparatus 24 includes a pressure relief body 241 and two pressure relief grooves 242. The pressure relief body 241 is circular and has a first surface 2411 and a second surface 2412 oppositely disposed in its thickness direction Z. The two pressure relief grooves 242 are oppositely disposed in the thickness direction Z of the pressure relief body 241 and disposed on the first surface 2411 and the second surface 2412 separately, a weak portion 2413 is formed between the two pressure relief grooves 242, the pressure relief groove 242 extends in a circumferential direction Y of the pressure relief body 241 and confines a pressure relief portion 2414, there is a distance between two ends of the pressure relief groove 242 in the circumferential direction Y of the pressure relief body 241, and the pressure relief portion 2414 is configured to open with the weak portion 2413 as a boundary when a pressure or temperature inside the battery cell 20 reaches a threshold, so as to release the pressure inside the battery cell 20.

In such a pressure relief apparatus 24, the pressure relief groove 242 is disposed on both the first surface 2411 and the second surface 2412 of the pressure relief body 241 to obtain a relatively low residual thickness and reduce a thickness of the weak portion 2413, so that the weak portion 2413 is prone to rupture to reduce a detonation pressure of the pressure relief apparatus 24, and the pressure relief body 241 can release pressure in a timely manner to reduce risks of fire, explosion, and the like in the battery cell 20 and effectively improve the safety of the battery cell 20. In addition, when the weak portion 2413 ruptures to release pressure, the area between the two ends of the pressure relief groove 242 does not rupture, so that the pressure relief portion 2414 opens in an outward flipping manner, and the pressure relief portion 2414 is prevented from falling off as a whole during pressure relief.

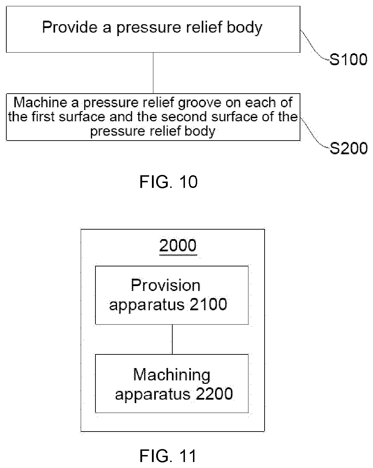

Refer to FIG. 10. FIG. 10 is a flowchart of a manufacturing method for a pressure relief apparatus 24 according to some embodiments of the present application. The manufacturing method for a pressure relief apparatus 24 according to the embodiments of the present application includes:
S100: Provide a pressure relief body 241, where the pressure relief body 241 has a first surface 2411 and a second surface 2412 oppositely disposed in its thickness direction Z; and
S200: Machine a pressure relief groove 242 on each of the first surface 2411 and the second surface 2412 of the pressure relief body 241, so that the pressure relief groove 242 on the first surface 2411 and the pressure relief groove 242 on the second surface 2412 are oppositely disposed in the thickness direction Z of the pressure relief apparatus 24, a weak portion 2413 is formed between the pressure relief groove 242 on the first surface 2411 and the pressure relief groove 242 on the second surface 2412, and the weak portion 2413 is configured to rupture when a pressure or temperature inside a battery cell 20 reaches a threshold, so as to release the pressure inside the battery cell 20.

It should be noted that relevant structures of the pressure relief apparatus 24 manufactured by the manufacturing method provided in the foregoing embodiments may be referenced to the pressure relief apparatus 24 provided in each foregoing embodiment, and will not be repeated here.

Refer to FIG. 11. FIG. 11 is a schematic block diagram of a manufacturing device 2000 for a pressure relief apparatus 24 according to some embodiments of the present application. The embodiments of the present application further provide a manufacturing device 2000 for a pressure relief apparatus 24. The manufacturing device 2000 includes a provision apparatus 2100 and a machining apparatus 2200.

The provision apparatus 2100 is configured to provide a pressure relief body 241, where the pressure relief body 241 has a first surface 2411 and a second surface 2412 oppositely disposed in its thickness direction Z. The machining apparatus 2200 is configured to machine a pressure relief groove 242 on each of the first surface 2411 and the second surface 2412, so that the pressure relief groove 242 on the first surface 2411 and the pressure relief groove 242 on the second surface 2412 are oppositely disposed in the thickness direction Z of the pressure relief apparatus 24, a weak portion 2413 is formed between the pressure relief groove 242 on the first surface 2411 and the pressure relief groove 242 on the second surface 2412, and the weak portion 2413 is configured to rupture when a pressure or temperature inside a battery cell 20 reaches a threshold, so as to release the pressure inside the battery cell 20.

It should be noted that relevant structures of the pressure relief apparatus 24 manufactured by the manufacturing device 2000 provided in the foregoing embodiments may be referenced to the pressure relief apparatus 24 provided in each foregoing embodiment, and will not be repeated here.

It should be noted that the embodiments in the present application and the features of the embodiments may be combined with each other on a non-conflict basis.

The foregoing embodiments are merely used for describing the technical solutions of the present application, rather than limiting the present application. For those skilled in the art, the present application may have various modifications and variations. The invention is defined by the scope of the claims.

## Claims

1. A pressure relief apparatus (24), applied in a battery cell (20), and comprising:
a pressure relief body (241), having a first surface (2411) and a second surface (2412) oppositely disposed in a thickness direction (Z) thereof; and
two pressure relief grooves (242), oppositely disposed in the thickness direction, and disposed on the first surface (2411) and the second surface (2412) separately, wherein a weak portion (2413) is formed between the two pressure relief grooves (242), and the weak portion (2413) is configured to rupture when a pressure or a temperature inside the battery cell (20) reaches a threshold, so as to release the pressure inside the battery cell (20);
the pressure relief apparatus (24) being **characterized in that**
an anti-oxidation layer (2417) is formed on each surface (2411, 2412) of the pressure relief body (241), and each anti-oxidation layer (2417) extends along a wall surface of its corresponding pressure relief groove (242) in an area where its corresponding pressure relief groove (242) is disposed;
wherein a thickness of each anti-oxidation layer (2417) in the area of its corresponding pressure relief groove (242) is smaller than that of the anti-oxidation layer (2417) in remaining areas.

2. The pressure relief apparatus (24) according to claim 1, wherein a distance between the first surface (2411) and the second surface (2412) is a first distance, and a ratio of a minimum thickness of the weak portion (2413) to the first distance is 0.12-0.5.

3. The pressure relief apparatus (24) according to claim 1 or 2, wherein the pressure relief groove (242) extends in a circumferential direction (Y) of the pressure relief body (241) and confines a pressure relief portion (2414); and
the pressure relief portion (2414) is configured to open with the weak portion (2413) as a boundary when the pressure or the temperature inside the battery cell (20) reaches the threshold, so as to release the pressure inside the battery cell (20).

4. The pressure relief apparatus (24) according to claim 3, wherein there is a distance between two ends of the pressure relief groove (242) in the circumferential direction (Y) of the pressure relief body (241).

5. The pressure relief apparatus (24) according to claim 3 or 4, wherein the pressure relief groove (242) is in an arc shape extending in the circumferential direction (Y) of the pressure relief body (241).

6. The pressure relief apparatus (24) according to any one of claims 3-5, wherein the pressure relief body (241) further has an outer surface (2415) and an inner surface (2416), the outer surface (2415) is oppositely disposed to the inner surface (2416) in the thickness direction (Z), and the pressure relief portion (2414) is configured to open from the inner surface (2416) towards the outer surface (2415) when the pressure or the temperature inside the battery cell (20) reaches the threshold; and
the pressure relief body (241) is provided with a concave portion (2415a), the concave portion (2415a) is recessed, in the thickness direction (Z), from the outer surface (2415) in a direction towards the inner surface (2416), and a bottom surface of the concave portion (2415a) forms the first surface (2411).

7. The pressure relief apparatus (24) according to claim 6, wherein a convex portion (2416a) protruding from the inner surface (2416) is formed at a position, corresponding to the concave portion (2415a), of the pressure relief body (241), and a face, away from the inner surface (2416), of the convex portion (2416a) forms the second surface (2412) in the thickness direction (Z).

8. The pressure relief apparatus (24) according to any one of claims 1-7, wherein the pressure relief groove (242) comprises:
two groove side surfaces (2421), facing each other along a width direction (X) of the pressure relief groove (242); and
a groove bottom surface (2422), connected to the two groove side surfaces (2421), wherein
the weak portion (2413) is formed in an area between the groove bottom surfaces (2422) of the two pressure relief grooves (242).

9. The pressure relief apparatus (24) according to claim 8, wherein the groove bottom surface (2422) is an arc surface recessed in a depth direction of the pressure relief groove (242).

10. The pressure relief apparatus (24) according to claim 8, wherein the groove bottom surface (2422) comprises a bottom plane (2422a) and arc chamfer surfaces (2422b), and the bottom plane (2422a) is connected to each of the groove side surfaces (2421) through one of the arc chamfer surfaces (2422b).

11. The pressure relief apparatus (24) according to any one of claims 8-10, wherein a distance between the two groove side surfaces (2421) gradually decreases in the depth direction of the pressure relief groove (242).

12. A battery cell (20), comprising:
an electrode assembly (21); and
a shell (22), configured for accommodating the electrode assembly (21), wherein
the shell (22) comprises the pressure relief apparatus (24) according to any one of claims 1-11.

13. The battery cell (20) according to claim 12, wherein the shell (22) further comprises a shell body, the shell body is configured for accommodating the electrode assembly (21), the shell body has an opening, and the pressure relief body (241) is configured for covering the opening.

## Patentansprüche

1. Druckentlastungsvorrichtung (24), die in einer Batteriezelle (20) angewendet wird und umfasst:
einen Druckentlastungskörper (241), der eine erste Oberfläche (2411) und eine zweite Oberfläche (2412) aufweist, die in einer Dickenrichtung (Z) davon gegenüberliegend angeordnet sind; und
zwei Druckentlastungsnuten (242), die in der Dickenrichtung gegenüberliegend angeordnet sind und auf der ersten Oberfläche (2411) und der zweiten Oberfläche (2412) getrennt angeordnet sind, wobei ein schwacher Abschnitt (2413) zwischen den beiden Druckentlastungsnuten (242) ausgebildet ist und der schwache Abschnitt (2413) konfiguriert ist, um zu brechen, wenn ein Druck oder eine Temperatur innerhalb der Batteriezelle (20) einen Schwellenwert erreicht, um den Druck innerhalb der Batteriezelle (20) abzulassen; wobei die Druckentlastungseinrichtung (24) **dadurch gekennzeichnet ist, dass**
eine Antioxidationsschicht (2417) auf jeder Oberfläche (2411, 2412) des Druckentlastungskörpers (241) ausgebildet ist und jede Antioxidationsschicht (2417) sich entlang einer Wandoberfläche ihrer entsprechenden Druckentlastungsnut (242) in einem Bereich erstreckt, in dem ihre entsprechende Druckentlastungsnut (242) angeordnet ist; wobei eine Dicke jeder Antioxidationsschicht (2417) in dem Bereich ihrer entsprechenden Druckentlastungsnut (242) kleiner ist als die der Antioxidationsschicht (2417) in den übrigen Bereichen.

2. Druckentlastungsvorrichtung (24) nach Anspruch 1, wobei eine Entfernung zwischen der ersten Oberfläche (2411) und der zweiten Oberfläche (2412) eine erste Entfernung ist und ein Verhältnis einer minimalen Dicke des schwachen Abschnitts (2413) zu der ersten Entfernung 0,12-0,5 beträgt.

3. Druckentlastungsvorrichtung (24) nach Anspruch 1 oder 2, wobei sich die Druckentlastungsrille (242) in einer Umfangsrichtung (Y) des Druckentlastungskörpers (241) erstreckt und einen Druckentlastungsabschnitt (2414) eingrenzt; und der Druckentlastungsabschnitt (2414) konfiguriert ist, um sich mit dem schwachen Abschnitt (2413) als eine Begrenzung zu öffnen, wenn der Druck oder die Temperatur innerhalb der Batteriezelle (20) den Schwellenwert erreicht, um den Druck innerhalb der Batteriezelle (20) abzulassen.

4. Druckentlastungsvorrichtung (24) nach Anspruch 3, wobei es eine Entfernung zwischen zwei Enden der Druckentlastungsnut (242) in der Umfangsrichtung (Y) des Druckentlastungskörpers (241) gibt.

5. Druckentlastungsvorrichtung (24) nach Anspruch 3 oder 4, wobei die Druckentlastungsnut (242) bogenförmig ist und sich in der Umfangsrichtung (Y) des Druckentlastungskörpers (241) erstreckt.

6. Druckentlastungsvorrichtung (24) nach einem der Ansprüche 3 bis 5, wobei der Druckentlastungskörper (241) ferner eine äußere Oberfläche (2415) und eine innere Oberfläche (2416) aufweist, die äußere Oberfläche (2415) der inneren Oberfläche (2416) in der Dickenrichtung (Z) gegenüberliegend angeordnet ist und der Druckentlastungsabschnitt (2414) konfiguriert ist, um sich von der inneren Oberfläche (2416) zur äußeren Oberfläche (2415) hin zu öffnen, wenn der Druck oder die Temperatur innerhalb der Batteriezelle (20) den Schwellenwert erreicht; und
der Druckentlastungskörper (241) mit einem konkaven Abschnitt (2415a) versehen ist, wobei der konkave Abschnitt (2415a) in der Dickenrichtung (Z) von der äußeren Oberfläche (2415) in Richtung der inneren Oberfläche (2416) ausgespart ist und eine untere Oberfläche des konkaven Abschnitts (2415a) die erste Oberfläche (2411) bildet.

7. Druckentlastungsvorrichtung (24) nach Anspruch 6, wobei an einer dem konkaven Abschnitt (2415a) entsprechenden Position des Druckentlastungskörpers (241) ein von der inneren Oberfläche (2416) abstehender konvexer Abschnitt (2416a) ausgebildet ist und eine von der inneren Oberfläche (2416) abgewandte Fläche des konvexen Abschnitts (2416a) die zweite Oberfläche (2412) in der Dickenrichtung (Z) bildet.

8. Druckentlastungsvorrichtung (24) nach einem der Ansprüche 1 bis 7, wobei die Druckentlastungsnut (242) umfasst:
zwei seitliche Nutoberflächen (2421), die einander entlang einer Breitenrichtung (X) der Druckentlastungsnut (242) zugewandt sind; und
eine untere Nutoberfläche (2422), die mit den beiden seitlichen Nutoberflächen (2421) verbunden ist, wobei
der schwache Abschnitt (2413) in einem Bereich zwischen den unteren Nutoberflächen (2422) der beiden Druckentlastungsnuten (242) ausgebildet ist.

9. Druckentlastungsvorrichtung (24) nach Anspruch 8, wobei die untere Nutoberfläche (2422) eine Bogenoberfläche ist, die in einer Tiefenrichtung der Druckentlastungsnut (242) ausgespart ist.

10. Druckentlastungsvorrichtung (24) nach Anspruch 8, wobei die untere Nutoberfläche (2422) eine untere Ebene (2422a) und Bogenfasenoberflächen (2422b) umfasst und die untere Ebene (2422a) mit jeder der seitlichen Nutoberflächen (2421) durch eine der Bogenfasenoberflächen (2422b) verbunden ist.

11. Druckentlastungsvorrichtung (24) nach einem der Ansprüche 8 bis 10, wobei eine Entfernung zwischen den beiden seitlichen Nutoberflächen (2421) in der Tiefenrichtung der Druckentlastungsnut (242) allmählich abnimmt.

12. Batteriezelle (20), umfassend: eine Elektrodenanordnung (21); und
eine Hülle (22), die zum Aufnehmen der Elektrodenanordnung (21) konfiguriert ist, wobei die Hülle (22) die Druckentlastungsvorrichtung (24) nach einem der Ansprüche 1 bis 11 umfasst.

13. Batteriezelle (20) nach Anspruch 12, wobei die Hülle (22) ferner einen Hüllenkörper umfasst, wobei der Hüllenkörper zum Aufnehmen der Elektrodenanordnung (21) konfiguriert ist, wobei der Hüllenkörper eine Öffnung aufweist, und wobei der Druckentlastungskörper (241) zum Abdecken der Öffnung konfiguriert ist.

## Revendications

1. Appareil de libération de pression (24), appliqué à une cellule de batterie (20), et comprenant :
un corps de libération de pression (241), ayant une première surface (2411) et une deuxième surface (2412) disposées à l'opposé dans une direction d'épaisseur (Z) de celui-ci ; et
deux rainures de libération de pression (242), disposées à l'opposé dans la direction d'épaisseur, et disposées sur la première surface (2411) et la deuxième surface (2412) séparément, une partie faible (2413) étant formée entre les deux rainures de libération de pression (242), et la partie faible (2413) est conçue pour se rompre quand une pression ou une température à l'intérieur de la cellule de batterie (20) atteint un seuil, de sorte à libérer la pression à l'intérieur de la cellule de batterie (20) ;
l'appareil de libération de pression (24) étant **caractérisé en ce que** une couche antioxydation (2417) est formée sur chaque surface (2411, 2412) du corps de libération de pression (241), et chaque couche antioxydation (2417) s'étend le long d'une surface de paroi de sa rainure de libération de pression (242) correspondante dans une zone où sa rainure de libération de pression (242) correspondante est disposée ;
dans lequel une épaisseur de chaque couche antioxydation (2417) dans la zone de sa rainure de libération de pression (242) correspondante est inférieure à celle de la couche antioxydation (2417) dans les autres zones.

2. Appareil de libération de pression (24) selon la revendication 1, dans lequel une distance entre la première surface (2411) et la deuxième surface (2412) est une première distance, et un rapport d'une épaisseur minimale de la partie faible (2413) à la première distance est de 0,12 à 0,5.

3. Appareil de libération de pression (24) selon la revendication 1 ou 2, dans lequel la rainure de libération de pression (242) s'étend dans une direction circonférentielle (Y) du corps de libération de pression (241) et confine une partie de libération de pression (2414) ; et
l'appareil de libération de pression (2414) est conçu pour s'ouvrir avec la partie faible (2413) en tant que limite quand la pression ou la température à l'intérieur de la cellule de batterie (20) atteint le seuil, de sorte à libérer la pression à l'intérieur de la cellule de batterie (20).

4. Appareil de libération de pression (24) selon la revendication 3, dans lequel il existe une distance entre deux extrémités de la rainure de libération de pression (242) dans la direction circonférentielle (Y) du corps de libération de pression (241).

5. Appareil de libération de pression (24) selon la revendication 3 ou 4, dans lequel la rainure de libération de pression (242) est en forme d'arc s'étendant dans la direction circonférentielle (Y) du corps de libération de pression (241).

6. Appareil de libération de pression (24) selon l'une quelconque des revendications 3 à 5, dans lequel le corps de libération de pression (241) comporte en outre une surface externe (2415) et une surface interne (2416), la surface externe (2415) est disposée à l'opposé de la surface interne (2416) dans la direction d'épaisseur (Z), et la partie de libération de pression (2414) est conçue pour s'ouvrir depuis la surface interne (2416) vers la surface externe (2415) quand la pression ou la température à l'intérieur de la cellule de batterie (20) atteint le seuil ; et
le corps de libération de pression (241) est pourvu d'une partie concave (2415a), la partie concave (2415a) est en creux, dans la direction d'épaisseur (Z), par rapport à la surface externe (2415) dans une direction vers la surface interne (2416), et une surface de fond de la partie concave (2415a) forme la première surface (2411).

7. Appareil de libération de pression (24) selon la revendication 6, dans lequel une partie convexe (2416a) saillant depuis la surface interne (2416) est formée au niveau d'une position, correspondant à la partie concave (2415a), du corps de libération de pression (241), et une face, éloignée de la surface interne (2416), de la partie convexe (2416a) forme la deuxième surface (2412) dans la direction d'épaisseur (Z).

8. Appareil de libération de pression (24) selon l'une quelconque des revendications 1 à 7, dans lequel la rainure de libération de pression (242) comprend :
deux surfaces latérales de rainure (2421), se faisant face l'une l'autre le long d'une direction de largeur (X) de la rainure de libération de pression (242) ; et
une surface de fond de rainure (2422), reliée aux deux surfaces latérales de rainure (2421), dans lequel
la partie faible (2413) est formée dans une zone entre les surfaces de fond de rainure (2422) des deux rainures de libération de pression (242).

9. Appareil de libération de pression (24) selon la revendication 8, dans lequel la surface de fond de rainure (2422) est une surface en arc en creux dans une direction de profondeur de la rainure de libération de pression (242).

10. Appareil de libération de pression (24) selon la revendication 8, dans lequel la surface de fond de rainure (2422) comprend un plan de fond (2422a) et des surfaces de chanfrein en arc (2422b), et le plan de fond (2422a) est relié à chacune des surfaces latérales de rainure (2421) à travers l'une des surfaces de chanfrein en arc (2422b).

11. Appareil de libération de pression (24) selon l'une quelconque des revendications 8 à 10, dans lequel une distance entre les deux surfaces latérales de rainure (2421) diminue progressivement dans la direction de profondeur de la rainure de libération de pression (242).

12. Cellule de batterie (20), comprenant :
un ensemble électrode (21) ; et
une enveloppe (22), conçue pour recevoir l'ensemble électrode (21), l'enveloppe (22) comprenant l'appareil de libération de pression (24) selon l'une quelconque des revendications 1 à 11.

13. Cellule de batterie (20) selon la revendication 12, dans laquelle l'enveloppe (22) comprend en outre un corps d'enveloppe, le corps d'enveloppe est conçu pour recevoir l'ensemble électrode (21), le corps d'enveloppe a une ouverture, et le corps de libération de pression (241) est conçu pour couvrir l'ouverture.
